# EUROPÄISCHE PATENTSCHRIFT

(11) **EP 4 179 375 B1**
(45) Veröffentlichungstag und Bekanntmachung des Hinweises auf die Patenterteilung: **25.12.2024**
(21) Anmeldenummer: 21743465.3
(22) Anmeldetag: 12.07.2021
(51) Int. Cl.: G02B 7/02, F21S 41/255, G02B 19/00, F21S 41/143, F21S 41/151, F21S 41/265, F21S 41/663, F21S 41/29

(54) **OBJEKTIVBAUGRUPPE FÜR EIN LICHTMODUL EINES KRAFTFAHRZEUGSCHEINWERFERS**
OBJECTIVE LENS GROUP FOR A LIGHT MODULE OF A MOTOR VEHICLE HEADLIGHT
GROUPE DE LENTILLES D'OBJECTIF POUR UN MODULE LUMINEUX D'UN PHARE DE VÉHICULE AUTOMOBILE

(30) Priorität: 13.07.2020 DE 102020118455
(43) Veröffentlichungstag der Anmeldung: 17.05.2023
(73) Patentinhaber: Marelli Germany GmbH, 72762 Reutlingen (DE)
(72) Erfinder: KLEIN, Waldemar, 72147 Nehren (DE); JOST, Anton, 72555 Metzingen (DE)
(74) Vertreter: DREISS Patentanwälte PartG mbB
(86) Internationale Anmeldenummer: PCT/EP2021/069332
(87) Internationale Veröffentlichungsnummer: WO 2022/013150

(56) Entgegenhaltungen:
- DE-A1- 102014 216 127
- JP-A- 2008 204 903
- US-A- 4 187 534
- US-A1- 2006 023 175
- US-B1- 6 172 822

## Beschreibung

Die vorliegende Erfindung betrifft eine Objektivbaugruppe für ein Lichtmodul eines Kraftfahrzeugscheinwerfers nach dem Oberbegriff des Anspruchs 1. Eine Objektivbaugruppe ist aus der DE 10 2014 216 127 A1 bekannt. Die bekannte Objektivbaugruppe weist eine erste Linse, eine erste Halbschale und eine zweite Halbschale auf. Die beiden Halbschalen weisen jeweils einen ersten Abschnitt und einen zweiten Abschnitt auf. Die ersten Abschnitte sind dazu eingerichtet, einen Rand der ersten Linse zu umgreifen. Die erste Linse weist eine erste optische Achse auf, die im Inneren der Halbschalen zwischen dem ersten Abschnitt und dem zweiten Abschnitt verläuft.

Die bekannte Objektivbaugruppe weist eine einzelne Projektionslinse als Objektiv auf. Die Abschnitte stellen bei der bekannten Objektivbaugruppe Enden der Objektivbaugruppe in einer zur optischen Achse parallelen Richtung dar. Am zweiten Ende der bekannten Objektivbaugruppe ist eine Lichtquelle angeordnet.

Aus der US 2006/023175 A1, US 6 172 822 B1 und der US 4 187 534 A ist jeweils eine Objektivbaugruppe mit den Merkmalen des Oberbegriffs bekannt.

Die Aufgabe der vorliegenden Erfindung besteht darin, eine Objektivbaugruppe für ein hochauflösendes Lichtmodul eines Kraftfahrzeugscheinwerfers anzugeben, die mehrere Linsen aufweist, die relativ zueinander präzise und mit hoher Temperaturstabilität positioniert und fixiert sind. Die Objektivbaugruppe soll sich durch eine geringe Zahl von Bauteilen, eine geringe Toleranzkette und eine einfache Montage auszeichnen. Weiter sollen keine Zusatzteile zur Vermeidung von Sunload und Streulicht erforderlich sein. Der Begriff der Sunload bezeichnet die Wirkung von Sonneneinstrahlung, die bei ungünstigen Verhältnissen durch die fokussierende Wirkung von optischen Komponenten des Lichtmoduls zu lokal unerwünscht oder sogar bauteilgefährdend hohen Temperaturen im Lichtmodul führen kann. Es gibt verschiedene Ursachen innerhalb einer Linse, die zu Streulicht führen und die dann die Lichtverteilung beeinflussen, indem beispielsweise bei einem Teilfernlicht Streulicht in Bereiche der Lichtverteilung gelangt, die dunkel sein sollten. Eine mögliche Quelle von Streulicht sind die Linsenränder, an denen die realen Flächen oft stärker von der Sollfläche abweichen als in der Mitte einer Linse.

Diese Aufgabe wird mit der Summe der Merkmale des Anspruchs 1 gelöst. Die Erfindung unterscheidet sich von dem eingangs genannten Stand der Technik dadurch, dass die Objektivbaugruppe eine zweite Linse aufweist, die eine mit der ersten optischen Achse zusammenfallende optische Achse aufweist, dass die zweiten Abschnitte dazu eingerichtet sind, einen Rand der zweiten Linse zu umgreifen, dass die erste Halbschale zwei erste Anlageflächenflächen aufweist und die zweite Halbschale zwei zweite Anlageflächen aufweist, wobei sich die Anlageflächen jeweils durchgehend vom ersten Abschnitt zum zweiten Abschnitt erstrecken, so dass jeweils eine der ersten Anlageflächen an einer der zweiten Anlageflächen vom ersten Abschnitt bis zum zweiten Abschnitt durchgehend anliegt, und dass die beiden Halbschalen im zusammengefügten Zustand ein Rohr ergeben, das an seinem ersten Abschnitt durch eine Linse verschlossen ist und das einen zwischen den beiden Linsen verlaufenden Teil der optischen Achse umgibt.

Durch die Verwendung der zweiten Linse in der Objektivbaugruppe lässt sich die Schärfe, mit der die innere Lichtverteilung, die durch die Objektivbaugruppe als eine äußere Lichtverteilung des Kraftfahrzeugscheinwerfers abgebildet wird, verbessern. Dadurch können auch hochauflösende innere Lichtverteilungen, wie sie mit Mikro-Leuchtdioden oder Mikrospiegelchips (DMD, digital mirror device) erzeugbar sind, unter Beibehaltung ihrer Auflösung als äußere Lichtverteilung des vom Lichtmodul, bzw. des Kraftfahrzeugscheinwerfers abstrahlbaren Lichtes abgebildet werden.

Dadurch, dass die zweiten Abschnitte dazu eingerichtet sind, einen Rand der zweiten Linse zu umgreifen, kann die zweite Linse präzise lokalisiert und fest im Lichtmodul gehalten werden. Dadurch, dass die erste Halbschale zwei erste Anlageflächenflächen aufweist und die zweite Halbschale zwei zweite Anlageflächen aufweist, wobei sich die Anlageflächen jeweils durchgehend vom ersten Abschnitt zum zweiten Abschnitt erstrecken, so dass jeweils eine der ersten Anlageflächen an einer der zweiten Anlageflächen vom ersten Abschnitt bis zum zweiten Abschnitt durchgehend anliegt, ergibt sich eine präzise Halterung der beiden Linsen relativ zueinander. Dadurch, dass die beiden Halbschalen im zusammengefügten Zustand ein Rohr ergeben, das an seinem ersten Abschnitt durch eine Linse verschlossen ist und das einen zwischen den beiden Linsen verlaufenden Teil der optischen Achse umgibt, wird der Strahlengang des im Inneren der Objektivbaugruppe propagierenden Nutzlichts nicht durch von außen einwirkende Einflüsse von Sonnenlicht oder durch inneres Streulicht beeinträchtigt.

Ferner wissen die beiden Halbschalen radial nach außen herausragende Vorsprünge und in Umfangsrichtung angeordnete Haltefedern auf, welche die Vorsprünge in einem elastisch verformten Zustand hintergreifen und dabei in den zur optischen Achse senkrechten Umfangsrichtungen der Halbschalen wirkende und die aneinander anliegenden Anlageflächen aufeinanderdrückende Spannkräfte erzeugen. Dadurch wird eine einfache Vormontage der Objektivbaugruppe ermöglicht. Die Objektivbaugruppe mit den eingesetzten Linsen kann dann beim weiteren Zusammenbau des Lichtmoduls problemlos als Ganzes gehandhabt werden. Im späteren Betrieb bewirkt die elastische Verspannung eine gute Vibrationsfestigkeit, da die Verspannung einerseits geringe Relativbewegungen der beiden Halbschalen gegeneinander erlaubt und andererseits durch spielausgleichende Rückstellkräfte für eine auch bei einwirkenden Vibrationen stabile Verbindung der Halbschalen und Linsen sorgt.

Eine bevorzugte Ausgestaltung zeichnet sich dadurch aus, dass die ersten Abschnitte dazu eingerichtet sind, den Rand der ersten Linse so zu umgreifen, dass die Position der ersten Linse in den beiden Richtungen ihrer optischen Achse formschlüssig fixiert ist. Dadurch wird die erste Linse mit geringem Montageaufwand, geringer Bauteilezahl und geringen Toleranzen in der Objektivbaugruppe gehalten.

Bevorzugt ist auch, dass die zweiten Abschnitte dazu eingerichtet sind, den Rand der zweiten Linse so zu umgreifen, dass die Position der zweiten Linse in den beiden Richtungen ihrer optischen Achse formschlüssig fixiert ist. Dadurch wird die zweite Linse mit geringem Montageaufwand, geringer Bauteilezahl und geringen Toleranzen in der Objektivbaugruppe gehalten.

Weiter ist bevorzugt, dass die Anlageflächen, mit denen die beiden Halbschalen aneinander anliegen, in einer Ebene liegen, in der auch die optische Achse verläuft. Die optische Achse verläuft in der Regel in einer Ebene, in der auch ein Durchmesser der ersten Linse und der zweiten Linse liegt. Die Linsen können dadurch bei der Montage der Objektivbaugruppe spannungsfrei in eine der beiden Halbschalen eingelegt werden.

Eine weitere bevorzugte Ausgestaltung zeichnet sich dadurch aus, dass die Anordnung der beiden Halbschalen relativ zueinander durch ineinandergreifende Formschlussstrukturen definiert wird, die in den Anlageflächen angeordnet sind und aus den Anlageflächen herausragen und/oder Vertiefungen wie zum Beispiel Sacklöcher sind. Dadurch wird die Lage der Halbschalen zueinander und damit auch die Lage der ersten Linse und der zweiten Linse zueinander präzise festgelegt, was für die Qualität der durch die Objektivbaugruppe vermittelten optischen Abbildung vorteilhaft ist.

Weiter ist bevorzugt, dass wenigstens die erste Linse in einer zu ihrer optischen Achse senkrechten Fläche einen kreisrunden Querschnitt aufweist.

Eine weitere bevorzugte Ausgestaltung zeichnet sich dadurch aus, dass das Lichtmodul einen Objektivträger aufweist, der eine kreisrunde Öffnung aufweist und der die ersten Enden in einer axialen Richtung formschlüssig und radial kraftschlüssig umgreift.

Bevorzugt ist auch, dass die Halbschalen aus Flüssigkristallpolymer bestehen. Flüssigkristallpolymer hat den Vorteil einer hohen Formtreue auch bei großen Temperaturschwankungen (z.B. -20°C bis 100°C). Durch die geringe Wärmeausdehnung und die hohe Formbeständigkeit der Halbschalen ergibt sich eine stabile Position der Linsen in der Objektiv-Baugruppe. Dies ist insbesondere in Verbindung mit der Erzeugung hochaufgelöster innerer Lichtverteilungen von Vorteil. Je temperaturstabiler die Linsenpositionen sind, desto kleiner fallen durch Temperaturänderungen der Objektivbaugruppe bedingte Verzerrungen der äußeren Lichtverteilung aus, die sich durch die mittels der Objektivbaugruppe erfolgende Abbildung der inneren Lichtverteilung ergibt.

Weiter ist bevorzugt, dass die Halbschalen Innenwände aufweisen, welche mit Antistreulichtstrukturen versehen sind.

Eine weitere bevorzugte Ausgestaltung zeichnet sich dadurch aus, dass die Antistreulichtstrukturen in die Innenwand eingeformt sind.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind

Ausführungsbeispiele der Erfindung sind in den Zeichnungen dargestellt und werden in der nachfolgenden Beschreibung näher erläutert.

Dabei zeigen, jeweils in schematischer Form:
- Figur 1: ein Ausführungsbeispiel eines erfindungsgemäßen Kraftfahrzeugscheinwerfers;
- Figur 2: ein Ausführungsbeispiel einer ersten Halbschale;
- Figur 3: ein Ausführungsbeispiel einer zweiten Halbschale; und
- Figur 4: die Gegenstände der Figuren 2 und 3 in einem zu einer Objektivbaugruppe zusammengefügten Zustand.

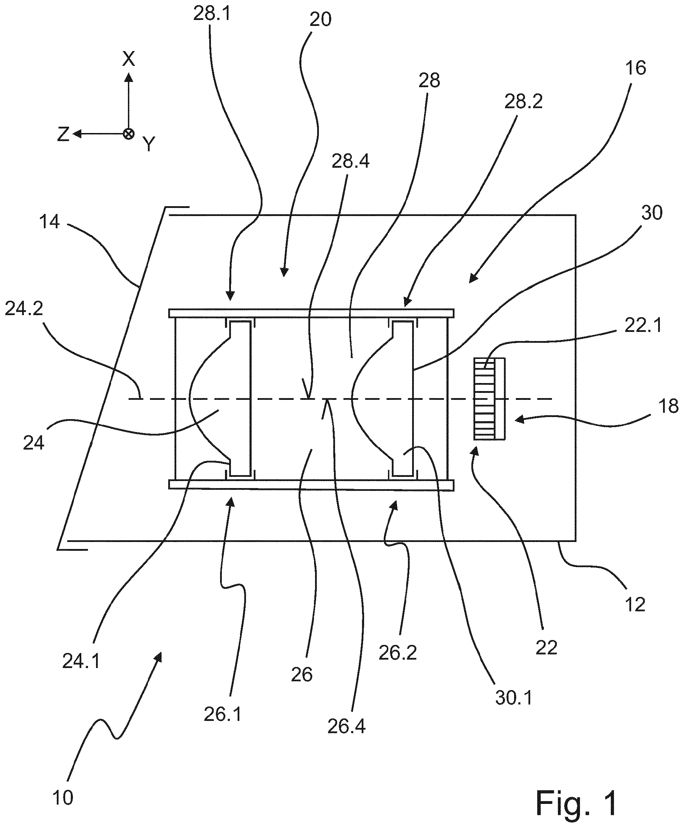

Im Einzelnen zeigt die Figur 1 einen Kraftfahrzeugscheinwerfer 10 mit einem Gehäuse 12, dessen Lichtaustrittsöffnung durch eine transparente Abdeckscheibe 14 abgedeckt wird. Im Inneren des Gehäuses 12 ist ein Lichtmodul 16 des Kraftfahrzeugscheinwerfers 10 angeordnet. Das Lichtmodul 16 weist eine Lichtquelle 18 und eine Objektivbaugruppe 20 auf. Die z-Richtung ist eine Hauptabstrahlrichtung des Lichtmoduls. Die x-Richtung ist bei bestimmungsgemäßer Verwendung des Kraftfahrzeugscheinwerfers vertikal. Die y-Richtung ist bei bestimmungsgemäßer Verwendung des Kraftfahrzeugscheinwerfers horizontal.

Die Lichtquelle 18 ist dazu eingerichtet, eine innere Lichtverteilung zu erzeugen. Die Lichtquelle 18 besteht zum Beispiel aus einer Anordnung 22 von individuell und/oder gruppenweise steuerbaren Mikro-Leuchtdioden 22'. Die (entsprechend einer hohen Zahl von Mikro-Leuchtdioden hochaufgelöste) Lichtverteilung ergibt sich dann zum Beispiel auf der Lichtaustrittsfläche der Anordnung 22, die in diesem Fall gleichzeitig eine Lichtaustrittsfläche der Lichtquelle 18 ist. Die Auflösung wird durch die Größe der Lichtaustrittsfläche einer einzelnen Mikro-Leuchtdiode 22' begrenzt. Alternativ kann die Lichtquelle 18 auch eine Anordnung aus einer lichtstarken Halbleiterlichtquelle und einer Mikrospiegelanordnung (DMD: digital mirror device) mit individuell oder gruppenweise verstellbaren Mikrospiegeln sein. Dabei werden die Mikrospiegel von der Halbleiterlichtquelle beleuchtet, und diese reflektieren das Licht je nach Spiegelstellung in die Objektivbaugruppe oder in andere Richtungen.

Die Objektivbaugruppe 20 ist dazu eingerichtet, die innere Lichtverteilung als äußere Lichtverteilung in den in z-Richtung vor dem Kraftfahrzeugscheinwerfer 10 liegenden Halbraum zu projizieren. Die Objektivbaugruppe besitzt zum Beispiel eine zylindrische, insbesondere eine kreiszylindrische Grundform. Dabei liegt die Zylinderachse zum Beispiel in der z-Richtung, und die Leitkurve der zylindrischen Grundform ist eine geschlossene Schleife, die zum Beispiel in der x-z-Ebene liegt.

Die Objektivbaugruppe 20 weist eine erste Linse 24, eine erste Halbschale 26 und eine zweite Halbschale 28 auf. Im zusammengefügten Zustand bilden die beiden Halbschalen 26, 28 ein Rohr, das die genannte Grundform aufweist. Die erste Linse 24 ist eine Lichtaustrittslinse der Objektivbaugruppe 20.

Jede der beiden Halbschalen 26, 28 weist jeweils einen ersten Abschnitt und einen zweiten Abschnitt auf. Die erste Halbschale 26 weist einen ersten Abschnitt 26.1 und einen zweiten Abschnitt 26.2 auf. Analog weist die zweite Halbschale 28 einen ersten Abschnitt 28.1 und einen zweiten Abschnitt 28.2 auf.

Die ersten Abschnitte 26.1, 28.1 sind jeweils dazu eingerichtet, einen Rand 24.1 der ersten Linse 24 formschlüssig so zu umgreifen, dass die Position der ersten Linse in den beiden Richtungen ihrer optischen Achse formschlüssig fixiert ist. Dadurch wird die erste Linse mit geringem Montageaufwand, geringer Bauteilezahl und geringen Toleranzen in der Objektivbaugruppe gehalten.

Der Formschluss erstreckt sich in einer Ausgestaltung über den ganzen Umfang des Linsenrandes, der in einer quer zur optischen Achse liegenden Fläche liegt. Alternativ dazu erstreckt sich der Formschluss über einzelne Teilabschnitte des Linsenrandes. Die Linsenränder sind zum Beispiel als um die optisch relevanten zentralen Teile der Linsen herumlaufende Kragen realisiert. Die Abschnitte weisen eine Hohlkehle auf, die nach Form und Abmessungen ein Negativ zu dem dann ein Positiv darstellenden Kragen bildet. Dies gilt bevorzugt für sämtliche in der Objektivbaugruppe angeordneten Linsen. Die Zahl der Teilabschnitte ist bevorzugt gleich drei, um eine automatische Zentrierung der Linse in den Teilabschnitten zu erzielen. Die Teilabschnitte sind bevorzugt äquidistant über den Umfang verteilt angeordnet

Analog dazu sind die zweiten Abschnitte 26.2, 28.2 dazu eingerichtet, einen Rand 30.1 der zweiten Linse 30 formschlüssig so zu umgreifen, dass die Position der zweiten Linse in den beiden Richtungen ihrer optischen Achse formschlüssig fixiert ist. Dadurch wird auch die zweite Linse mit geringem Montageaufwand, geringer Bauteilezahl und geringen Toleranzen in der Objektivbaugruppe gehalten.

Der Formschluss erstreckt sich auch hier in einer Ausgestaltung über den ganzen Umfang des Linsenrandes, der in einer quer zur optischen Achse liegenden Fläche liegt. Alternativ dazu erstreckt sich der Formschluss über einzelne Teilabschnitte des Linsenrandes. Die Zahl der Teilabschnitte ist bevorzugt gleich drei, um eine automatische Zentrierung der Linse in den Teilabschnitten zu erzielen. Die Teilabschnitte sind bevorzugt äquidistant über den Umfang verteilt angeordnet.

Die Ränder 24.1 und 30.1 verlaufen bevorzugt in Flächen, die parallel zur x-y-Ebene liegen. Die erste Linse 24 weist eine erste optische Achse 24.2 auf, die im Inneren der Halbschalen 26, 28 zwischen den ersten Abschnitten 26.1, 28. 1 und den zweiten Abschnitten 26.2, 28.2 verläuft. Die erste optische Achse 24.2 fällt zum Beispiel mit der z-Richtung zusammen. Die zweite Linse 30 weist bevorzugt eine mit der ersten optischen Achse 24.2 zusammenfallende optische Achse auf.

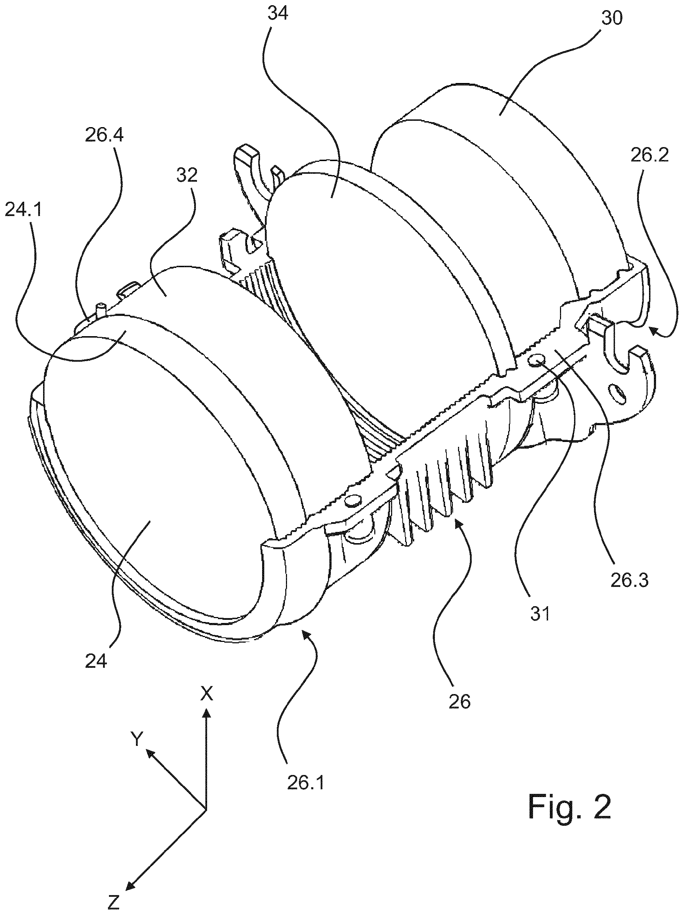

Figur 2 zeigt ein Ausführungsbeispiel einer ersten Halbschale 24 in Schrägansicht zusammen mit einer ersten Linse 24, einer zweiten Linse 30, einer dritten Linse 32 und einer vierten Linse 34. Die dritte Linse 32 und die vierte Linse 34 sind nur optional vorhanden.

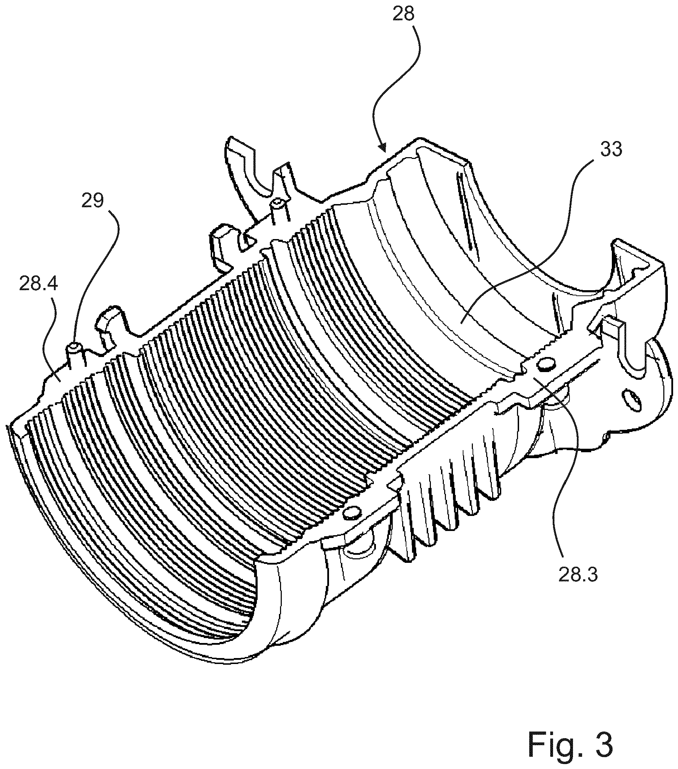

Figur 3 zeigt eine dazu komplementäre zweite Halbschale 28. Die erste Halbschale 26 weist zwei erste Anlageflächen 26.3, 26.4 auf, und die zweite Halbschale 28 weist zwei zweite Anlageflächen 28.3, 28.4 auf. Die zweite Anlagefläche 28.4 ist auch in der Figur 1 als Kante sichtbar.

Die Anlageflächen erstrecken sich jeweils durchgehend wenigstens vom ersten Abschnitt 26.1 zum zweiten Abschnitt 26.2, so dass jeweils eine der ersten Anlageflächen 26.3, 26.4 an einer der zweiten Anlageflächen 28.3, 28.4 vom ersten Abschnitt 26.1 bis zum zweiten Abschnitt 26.2 durchgehend anliegt.

Zum Beispiel erstrecken sich die Anlageflächen 26.4 und 28.4 durchgehend wenigstens vom ersten Abschnitt 26.1 zum zweiten Abschnitt 26.2, so dass die erste Anlagefläche 26.4 an der zweiten Anlagefläche 28.4 vom ersten Abschnitt 26.1 bis zum zweiten Abschnitt durchgehend anliegt.

Die Anordnung der beiden Halbschalen 26, 28 relativ zueinander wird durch ineinandergreifende Formschlussstrukturen definiert, die in den Anlageflächen 26.3, 26.4, 28.3, 28.4 angeordnet sind. Die Formschlussstrukturen sind bevorzugt Erhebungen 29 (z.B. Passstifte) in der jeweils einen Halbschale, die Negative zu Vertiefungen 31 in der jeweils anderen Halbschale sind.

Die Halbschalen 26, 28 bestehen aus Flüssigkristallpolymer. Wie Figur 3 zeigt, sind Innenwände der Halbschalen 26, 28 mit Antistreulichtstrukturen 33 versehen. In einer Ausgestaltung sind die Antistreulichtstrukturen 33 in die Innenwände eingeformte Rillen (Riffelung). Alternativ können die Streustrukturen in einer schwarzen Beschichtung bestehen oder eine solche Beschichtung aufweisen.

Bei der vorliegenden Erfindung können die Rippen, die die Linsen in der Fassung halten, höher werden um den Rand einer Linse abzudecken und so Streulicht zu reduzieren (das könnte auf der Lichteintrittsseite des Objektivs realisiert sein). Ebenso können zusätzliche Rippen eingefügt werden, die dann im fertigen Objektiv die Funktion einer Blende realisieren. In Figur 3 sind die Rippen gut zu erkennen. In einer bevorzugten Ausgestaltung sind die Rippen auch unterschiedlich hoch.

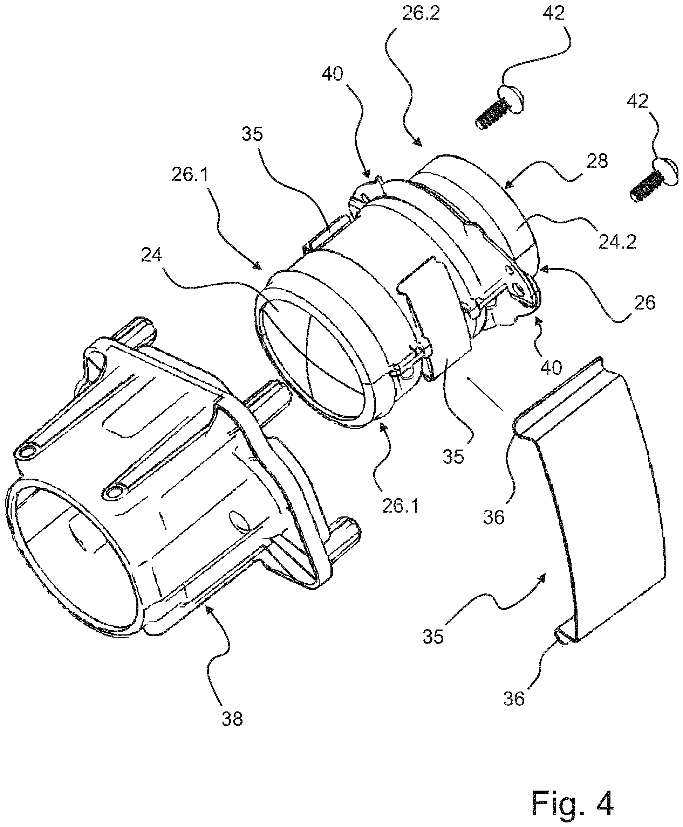

Figur 4 zeigt die Gegenstände der Figuren 2 und 3 in einem zu einer Objektivbaugruppe zusammengefügten Zustand. In diesem Zustand ergeben die beiden Halbschalen 26, 28 ein Rohr mit einem ersten Abschnitt und einem zweiten Abschnitt, das an seinem ersten Abschnitt 26.1 durch die erste Linse 24 verschlossen ist und das einen zwischen den beiden Linsen 24, 30 verlaufenden Teil der optischen Achse 24.2 umgibt. Die zweite Linse 30 schließt das Rohr an seinem zweiten Abschnitt 26.2 ab. Der erste Abschnitt bildet bevorzugt ein erstes Rohrende. Der zweite Abschnitt bildet bevorzugt ein zweites Rohrende. Das Rohr hat bevorzugt eine kreiszylindrische Grundform mit der optischen Achse als Zylinderachse. Die Anlageflächen liegen in einem Längsschnitt durch diese Grundform, in dem auch die Zylinderachse verläuft. Die Zylinderachse fällt mit der optischen Achse 24.1 zusammen.

Das Rohr weist im zusammengefügten Zustand bevorzugt nur die zur Aufnahme der ersten Linse und der zweiten Linse eingerichteten Öffnungen auf. Dadurch wird der Strahlengang des im Inneren der Objektivbaugruppe propagierenden Nutzlichts nicht durch von außen einwirkende Einflüsse von Streulicht aus der Umgebung und/oder Sonnenlicht beeinträchtigt.

Die Anlageflächen, mit denen die beiden Halbschalen aneinander anliegen, liegen in einer Ebene, in der auch die optische Achse 24.2 verläuft. Die optische Achse 24.2 verläuft in der Regel quer zu einer Ebene, in der auch ein Durchmesser der ersten Linse oder der zweiten Linse liegt. Die Linsen können dadurch bei der Montage der Objektivbaugruppe spannungsfrei in eine der beiden Halbschalen eingelegt werden
Die beiden Halbschalen 26, 28 weisen radial nach außen herausragende Vorsprünge und in Umfangsrichtung angeordnete Haltefedern 35 auf, welche die Vorsprünge in einem elastisch verformten Zustand hintergreifen und dabei in den zur optischen Achse 24.2 senkrechten Umfängen der Halbschalen wirkende und die aneinander anliegenden Anlageflächen aufeinanderdrückende Spannkräfte erzeugen. Die Haltefedern 35 sind bevorzugt Blattfedern aus Federstahl mit einwärts gebogenen Enden 36, die in ihrer Form so an die Vorsprünge angepasst sind, dass sie diese in einem elastisch verformten Zustand hintergreifen können. Die Vorsprünge sind in der Figur 4 durch die montierten Blattfedern 35 verdeckt.

Wenigstens die erste Linse 24 weist in einer zu ihrer optischen Achse senkrechten Fläche einen kreisrunden Querschnitt auf.

Der Objektivträger 38 weist eine kreisrunde Öffnung auf und umgreift die ersten Enden formschlüssig und/oder kraftschlüssig. Die Halbschalen weisen radial (quer zur optischen Achse 24.2) abstehende Laschen 40 auf, mit denen sie gemeinsam mit dem Objektivträger 38 verschraubbar sind. Dazu dienen die in der Figur 4 dargestellten Schrauben 42, deren Ausrichtung ihre Einschraubrichtung darstellt. Die so gebildete Baugruppe aus Objektivträger 38 und Objektivbaugruppe 20 wird im Lichtmodul in seiner Lage relativ zu der Lichtquelle eingestellt.

Die Form der Linsen und damit der weiter oben genannten geschlossenen Schleife muss nicht zwangsläufig kreisförmig sein. Wesentlich ist, dass die Form der Halbschalen partiell der Form der Linsenränder entspricht und damit eine präzise definierte Lage der Linsen in der Objektivbaugruppe festlegt. Die Lage wird durch bevorzugt zwei Fixierelemente wie Haltefedern 35 in der definierten Lage vorfixiert. Anschließend wird die so gebildete Objektivbaugruppe mit dem Objektivträger 38 zusammengebaut. Dadurch wird der federnde Zusammenhalt der beiden Halbschalen und damit des gesamten in den beiden Halbschalen angeordneten Linsenpaketes dauerhaft verstärkt.

## Patentansprüche

1. Objektivbaugruppe (20) für ein Lichtmodul (12) eines Kraftfahrzeugscheinwerfers (10), wobei die Objektivbaugruppe (20) eine erste Linse (24), eine erste Halbschale (26) und eine zweite Halbschale (28) aufweist, wobei die beiden Halbschalen (26, 28) jeweils einen ersten Abschnitt (26.1, 28.1) und einen zweiten Abschnitt (26.2, 28.2) aufweisen, die ersten Abschnitte (26.1, 28.1) dazu eingerichtet sind, einen Rand (24.1) der ersten Linse (24) zu umgreifen, und wobei die erste Linse (24.1) eine erste optische Achse (24.2) aufweist, die im Inneren der Halbschalen (26, 28) zwischen dem ersten Abschnitt (26.1, 28.1) und dem zweiten Abschnitt (26.2, 28.2) verläuft, wobei die Objektivbaugruppe (20) eine zweite Linse (30) aufweist, die eine mit der ersten optischen Achse (24.1) zusammenfallende optische Achse aufweist, dass die zweiten Abschnitte (26.2, 28.2) dazu eingerichtet sind, einen Rand (30.1) der zweiten Linse (30) zu umgreifen, dass die erste Halbschale (26) zwei erste Anlageflächen (26.3, 26.4) aufweist und die zweite Halbschale (28) zwei zweite Anlageflächen (28.3, 28.4) aufweist, wobei sich die Anlageflächen (26.3, 26.4, 28.3, 28.4) jeweils durchgehend vom ersten Abschnitt (26.1, 28.1) zum zweiten Abschnitt (26.2, 28.2) erstrecken, so dass jeweils eine der ersten Anlageflächen (26.3, 26.4) an einer der zweiten Anlageflächen (28.3, 28.4) vom ersten Abschnitt (26.1, 28.1) bis zum zweiten Abschnitt (26.2, 28.2) durchgehend anliegt, und dass die beiden Halbschalen (26, 28) im zusammengefügten Zustand ein Rohr ergeben, das an seinem ersten Abschnitt (26.1, 28.1) durch eine Linse (24) verschlossen ist und das einen zwischen den beiden Linsen (24, 30) verlaufenden Teil der optischen Achse (24.1) umgibt, **dadurch gekennzeichnet, dass** die beiden Halbschalen (26, 28) radial nach außen herausragende Vorsprünge und Haltefedern (35) aufweisen, welche die Vorsprünge in einem elastisch verformten Zustand hintergreifen und dabei in den zur optischen Achse (24.1) senkrechten Umfangsrichtungen der Halbschalen (26, 28) wirkende und die aneinander anliegenden Anlageflächen aufeinanderdrückende Spannkräfte erzeugen.

2. Objektivbaugruppe (20) nach Anspruch 1, **dadurch gekennzeichnet, dass** die ersten Abschnitte (26.1, 28.1) dazu eingerichtet sind, den Rand der ersten Linse (24) so zu umgreifen, dass die Position der ersten Linse (24) in den beiden Richtungen ihrer optischen Achse (24.1) formschlüssig fixiert ist.

3. Objektivbaugruppe (20) nach Anspruch 1 oder 2, **dadurch gekennzeichnet, dass** die zweiten Abschnitte (26.2, 28.2) dazu eingerichtet sind, den Rand der zweiten Linse so zu umgreifen, dass die Position der zweiten Linse (30) in den beiden Richtungen ihrer optischen Achse formschlüssig fixiert ist.

4. Objektivbaugruppe (20) nach einem der vorhergehenden Ansprüche, **dadurch gekennzeichnet, dass** die Anlageflächen (26.3, 26.4, 28.3, 28.4), mit denen die beiden Halbschalen (26, 28) aneinander anliegen, in einer Ebene liegen, in der auch die optische Achse (24.1) verläuft.

5. Objektivbaugruppe (20) nach einem der vorhergehenden Ansprüche, **dadurch gekennzeichnet, dass** die Anordnung der beiden Halbschalen (26, 28) relativ zueinander durch ineinandergreifende Formschlussstrukturen (29, 31) definiert wird, die in den Anlageflächen angeordnet sind.

6. Objektivbaugruppe (20) nach einem der vorhergehenden Ansprüche, **dadurch gekennzeichnet, dass** wenigstens die erste Linse (24) in einer zu ihrer optischen Achse (24.1) senkrechten Fläche einen kreisrunden Querschnitt aufweist.

7. Objektivbaugruppe (20) nach Anspruch 6, **dadurch gekennzeichnet, dass** sie einen Objektivträger (38) aufweist, der eine Öffnung aufweist und der die ersten Enden in einer axialen Richtung formschlüssig und radial kraftschlüssig umgreift.

8. Objektivbaugruppe (20) nach einem der vorhergehenden Ansprüche, **dadurch gekennzeichnet, dass** die Halbschalen (26, 28) aus Flüssigkristallpolymer bestehen.

9. Objektivbaugruppe (20) nach einem der vorhergehenden Ansprüche **dadurch gekennzeichnet, dass** die Halbschalen Innenwände aufweisen, welche mit Antistreulichtstrukturen (33) versehen sind.

10. Objektivbaugruppe (20) nach Anspruch 7, **dadurch gekennzeichnet, dass** die Antistreulichtstrukturen (33) in eine Innenwand eingeformt sind.

## Claims

1. Objective lens assembly (20) for a light module (12) of a motor vehicle headlight (10), the objective lens assembly (20) having a first lens (24), a first half-shell (26) and a second half-shell (28), the two half-shells (26, 28) each having a first portion (26.1, 28.1) and a second portion (26.2, 28.2), the first portions (26.1, 28.1) being designed to encompass an edge (24.1) of the first lens (24), and the first lens (24.1) having a first optical axis (24.2) which extends inside the half-shells (26, 28) between the first portion (26.1, 28.1) and the second portion (26.2, 28.2), the objective lens assembly (20) having a second lens (30) which has an optical axis coinciding with the first optical axis (24.1), that the second portions (26.2, 28.2) are designed to encompass an edge (30.1) of the second lens (30), that the first half-shell (26) has two first contact surfaces (26.3, 26.4) and the second half-shell (28) has two second contact surfaces (28.3, 28.4), the contact surfaces (26.3, 26.4, 28.3, 28.4) each extending continuously from the first portion (26.1, 28.1) to the second portion (26.2, 28.2), so that each of the first contact surfaces (26.3, 26.4) continuously abuts one of the second contact surfaces (28.3, 28.4) from the first portion (26.1, 28.1) to the second portion (26.2, 28.2), and that the two half-shells (26, 28) when joined together form a tube which is closed at its first portion (26.1, 28.1) by a lens (24) and which surrounds a part of the optical axis (24.1) that extends between the two lenses (24, 30), **characterized in that** the two half-shells (26, 28) have radially outwardly protruding projections and retaining springs (35) which engage behind the projections in a resiliently deformed state and thereby generate clamping forces which act in the circumferential directions of the half-shells (26, 28), which circumferential directions are perpendicular to the optical axis (24.1), and press the abutting contact surfaces against one another.

2. Objective lens assembly (20) according to claim 1, **characterized in that** the first portions (26.1, 28.1) are designed to encompass the edge of the first lens (24) such that the position of the first lens (24) is form-fittingly fixed in the two directions of its optical axis (24.1).

3. Objective lens assembly (20) according to claim 1 or claim 2, **characterized in that** the second portions (26.2, 28.2) are designed to encompass the edge of the second lens such that the position of the second lens (30) is form-fittingly fixed in the two directions of its optical axis.

4. Objective lens assembly (20) according to any of the preceding claims, **characterized in that** the contact surfaces (26.3, 26.4, 28.3, 28.4) with which the two half-shells (26, 28) abut one another lie in a plane in which the optical axis (24.1) also extends.

5. Objective lens assembly (20) according to any of the preceding claims, **characterized in that** the arrangement of the two half-shells (26, 28) relative to one another is defined by interlocking form-fitting structures (29, 31) which are arranged in the contact surfaces.

6. Objective lens assembly (20) according to any of the preceding claims, **characterized in that** at least the first lens (24) has a circular cross-section in a surface which is perpendicular to the optical axis (24.1) of said first lens.

7. Objective lens assembly (20) according to claim 6, **characterized in that** the objective lens assembly has a lens carrier (38) which has an opening and which form-fittingly and radially force-fittingly surrounds the first ends in an axial direction.

8. Objective lens assembly (20) according to any of the preceding claims, **characterized in that** the half-shells (26, 28) are made of liquid crystal polymer.

9. Objective lens assembly (20) according to any of the preceding claims, **characterized in that** the half-shells have inner walls which are provided with anti-scattering light structures (33).

10. Objective lens assembly (20) according to claim 7, **characterized in that** the anti-scattering light structures (33) are formed in an inner wall.

## Revendications

1. Ensemble objectif (20) pour un module d'éclairage (12) d'un phare de véhicule automobile (10), dans lequel l'ensemble objectif (20) présente une première lentille (24), une première demi-coque (26) et une seconde demi-coque (28), dans lequel les deux demi-coques (26, 28) présentent respectivement une première section (26,1, 28,1) et une seconde section (26,2, 28,2), les premières sections (26,1, 28,1) sont conçues pour entourer un bord (24,1) de la première lentille (24), et dans lequel la première lentille (24,1) présente un premier axe optique (24,2) qui s'étend à l'intérieur des demi-coques (26, 28) entre la première section (26,1, 28,1) et la seconde section (26,2, 28,2), dans lequel l'ensemble objectif (20) présente une seconde lentille (30) qui présente un axe optique coïncidant avec le premier axe optique (24,1), en ce que les secondes sections (26,2, 28,2) sont conçues pour entourer un bord (30,1) de la seconde lentille (30), en ce que la première demi-coque (26) présente deux premières surfaces d'appui (26,3, 26,4) et la seconde demi-coque (28) présente deux secondes surfaces d'appui (28,3, 28,4), dans lequel les surfaces d'appui (26,3, 26,4, 28,3, 28,4) s'étendent respectivement de manière continue de la première section (26,1, 28,1) jusqu'à la seconde section (26,2, 28,2), de sorte que respectivement l'une des premières surfaces d'appui (26,3, 26,4) s'appuie de manière continue sur l'une des secondes surfaces d'appui (28,3, 28,4) de la première section (26,1, 28,1) jusqu'à la seconde section (26,2, 28,2), et en ce que les deux demi-coques (26, 28) forment, à l'état assemblé, un tube qui, sur sa première section (26,1, 28,1), est fermé par une lentille (24) et qui entoure une partie de l'axe optique (24,1) s'étendant entre les deux lentilles (24, 30), **caractérisé en ce que** les deux demi-coques (26, 28) présentent des saillies et des ressorts de maintien (35) faisant saillie radialement vers l'extérieur, lesquels ressorts de maintien viennent en prise par l'arrière avec les saillies dans un état déformé élastiquement et génèrent ainsi des forces de serrage agissant dans les directions périphériques des demi-coques (26, 28) perpendiculaires à l'axe optique (24,1) et pressant les unes contre les autres les surfaces d'appui s'appuyant les unes contre les autres.

2. Ensemble objectif (20) selon la revendication 1, **caractérisé en ce que** les premières sections (26,1,28,1) sont conçues pour entourer le bord de la première lentille (24) de sorte que la position de la première lentille (24) dans les deux directions de son axe optique (24,1) est fixée par complémentarité de forme.

3. Ensemble objectif (20) selon la revendication 1 ou 2, **caractérisé en ce que** les secondes sections (26,2, 28,2) sont conçues pour entourer le bord de la seconde lentille de sorte que la position de la seconde lentille (30) dans les deux directions de son axe optique est fixée par complémentarité de forme.

4. Ensemble objectif (20) selon l'une des revendications précédentes, **caractérisé en ce que** les surfaces d'appui (26,3, 26,4, 28,3, 28,4) avec lesquelles les deux demi-coques (26, 28) s'appuient l'une contre l'autre se trouvent dans un plan dans lequel s'étend également l'axe optique (24,1).

5. Ensemble objectif (20) selon l'une des revendications précédentes, **caractérisé en ce que** l'agencement des deux demi-coques (26, 28) l'une par rapport à l'autre est défini par des structures de liaison par complémentarité de forme (29, 31) venant en prise l'une dans l'autre et disposées dans les surfaces d'appui.

6. Ensemble objectif (20) selon l'une des revendications précédentes, **caractérisé en ce qu'**au moins la première lentille (24) présente une section transversale circulaire dans une surface perpendiculaire à son axe optique (24,1).

7. Ensemble objectif (20) selon la revendication 6, **caractérisé en ce qu'**il présente un support d'objectif (38) qui présente une ouverture et qui entoure les premières extrémités par complémentarité de forme et à force radialement dans une direction axiale.

8. Ensemble objectif (20) selon l'une des revendications précédentes, **caractérisé en ce que** les demi-coques (26, 28) sont en polymère à cristaux liquides.

9. Ensemble objectif (20) selon l'une des revendications précédentes, **caractérisé en ce que** les demi-coques présentent des parois intérieures qui sont pourvues de structures antilumière parasite (33).

10. Ensemble objectif (20) selon la revendication 7, **caractérisé en ce que** les structures antilumière parasite (33) sont formées dans une paroi intérieure.
